# EUROPEAN PATENT SPECIFICATION

(11) **EP 2 243 406 B1**
(45) Date of publication and mention of the grant of the patent: **30.03.2011**
(21) Application number: 09425151.9
(22) Date of filing: 22.04.2009
(51) Int. Cl.: A47J 31/44, A47J 31/46

(54) **Shut-off and regulating device for steam and/or hot water outflow**
Absperr- und Regelvorrichtung für Dampf- und/oder Heißwasserablass
Dispositif de coupure et de régulation du débit de sortie de vapeur et/ou d'eau chaude

(43) Date of publication of application: 27.10.2010
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- DE-U1-202004 009 074
- FR-A- 2 559 663

## Description

The present invention relates to a shut-off and regulating device for steam/hot water outflow, in particular for coffee machines. For some time coffee machines have been present on the market having a shut-off and regulating device for steam and hot water outflow usually formed of a stator, associated with which, through interposition of at least one sealing gasket, is a rotor, which can be operated to rotate and regulate the discharge outlet. DE-U-202004009074 discloses a shut-off and regulating device according to the preamble of claim 1.

In many cases, the sealing gasket has with a large contact surface with the part against which it slides and consequently excessive sliding friction develops and noteworthy manual effort is required to operate the rotor.

Moreover, seal of the gasket is not always guaranteed as the pressure of the fluid increases. In fact, the necessary requirements of reliability and duration may not always be guaranteed, resulting in progressive and persistent decrease in the performance of the device.

Finally, it must be noted that to produce a conventional valve of this type the constituent parts are subjected to a series of mechanical and other machining operations, such as turning, polishing, chrome-plating, etc., which at times can be relatively delicate and demanding. The cost of the final product in particular is considerable due to the material of the constituent parts, to the nature of the machining operations of the constituent parts, and to the time required to perform these operations and for subsequent assembly.

The technical aim proposed by the present invention is, therefore, to produce a shut-off and regulating device for steam and/or hot water outflow which allows the aforesaid drawbacks of prior art to be overcome.

Within this technical aim an object of the invention is to produce a shut-off and regulating device for steam and/or hot water discharge which can be opened and closed easily without excessive manual effort.

Another object of the invention is to produce a shut-off and regulating device for steam and/or hot water outflow which ensures seal of the gasket between the fixed part and the rotating part as the pressure of the fluid increases.

Yet another object of the invention is to produce a shut-off and regulating device for steam and/or hot water outflow which has constituent parts that do not require delicate and demanding mechanical and other machining operations.

A further object of the invention is to produce a shut-off and regulating device for steam and/or hot water outflow in which the nature of the constituent parts, the nature of the machining operations of the constituent parts and the time required to perform these operations and for subsequent final assembly do not have a significant influence on the cost of the finished product.

Another object of the present invention is to provide a shut-off and regulating device for steam and/or hot water outflow which is simple, reliable and long lasting while maintaining a high standard of performance.

Yet a further object of the present invention is to provide a shut-off and regulating device for steam and/or hot water outflow with highly flexible use which, as well as the possibility of opening and closing an outlet, also offers the possibility of diverting the flow towards a plurality of outlets.

The technical aim, and these and other objects, according to the present invention are achieved by providing a shut-off and regulating device for steam and/or hot water outflow according to claim 1.

Other characteristics of the present invention are also defined in the subsequent claims.

Further characteristics and advantages of the invention will be more apparent from the description of a preferred but not exclusive embodiment of the shut-off and regulating device for steam and/or hot water outflow according to the invention, shown by way of non-limiting example in the accompanying drawings, in which:
- Figure 1 shows a plan view of the device in conformity with an embodiment of the present invention;
- Figure 2 shows a view of the device sectioned along the line 1-1 of Figure 1, in which the stem is in the open position;
- Figure 3 shows the device of Figure 2 with the stem in the closed position;
- Figure 4 shows a view of the device in closed condition, sectioned along the line 2-2 of Figure 2;
- Figure 5 is a perspective view of a device according to a different preferred embodiment of the present invention in which the function of flow diverter is also provided, with the stem in the angular position to open the first connection passage;
- Figure 6 is an axially sectioned side elevation view of the device of Figure 5 in the same angular position of the stem;
- Figure 7 is an axially sectioned side elevation view of the device of Figure 5 in the angular position of the stem in which the first connection passage is closed and the third connection passage is open;
- Figure 8 is an axially sectioned side elevation view of a variant of the device of Figure 6 with the stem in the angular position to open the first connection passage and close the third connection passage; and
- Figure 9 is an axially sectioned side elevation view of the device of Figure 8 in the angular position of the stem in which the third connection passage is closed.

Equivalent parts in the description will be indicated with the same numerical reference.

With reference to the figures above, they show a shut-off and regulating device for a fluid, in particular steam and/or hot water, indicated as a whole with the reference number 1.

The field of application is in particular that of coffee machines. The device 1 comprises a stator 2 with an inlet 3 and at least a first outlet 4 for the fluid.

The stator 2 houses a stem 6 rotatable about its axis 7.

Hereunder, the term "axial" will always be intended as the direction of the axis 7 of the stem 6.

A sealing element 8, supported fixed in the stator 2, extends around the stem 6.

The sealing element 8 is interposed between the inlet 3 and each outlet 4, 4' for fluid existing in the stator 2.

The device 1 has a first connection passage between the inlet 3 and the first outlet 4.

The stem 6 in turn has a first element movable as a result of rotation of the stem 6 between an open position and a closed position of the first connection passage.

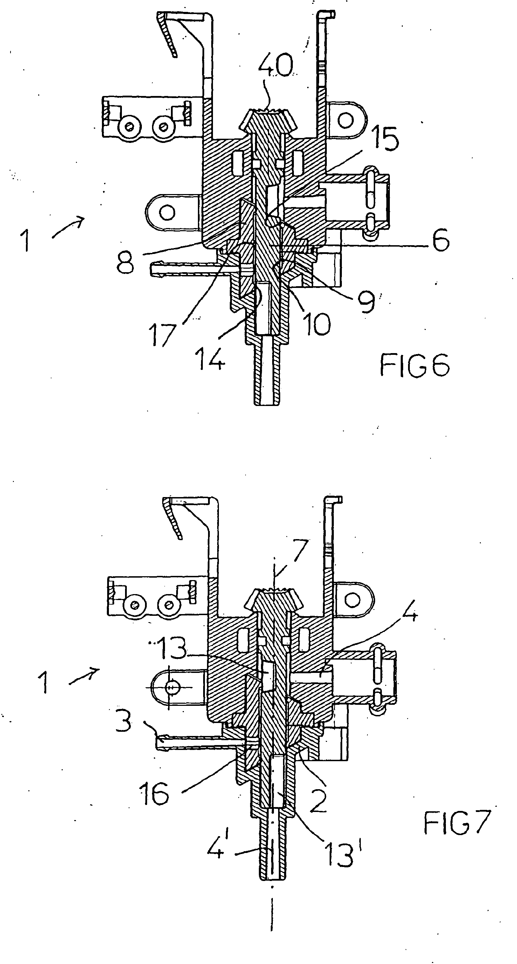

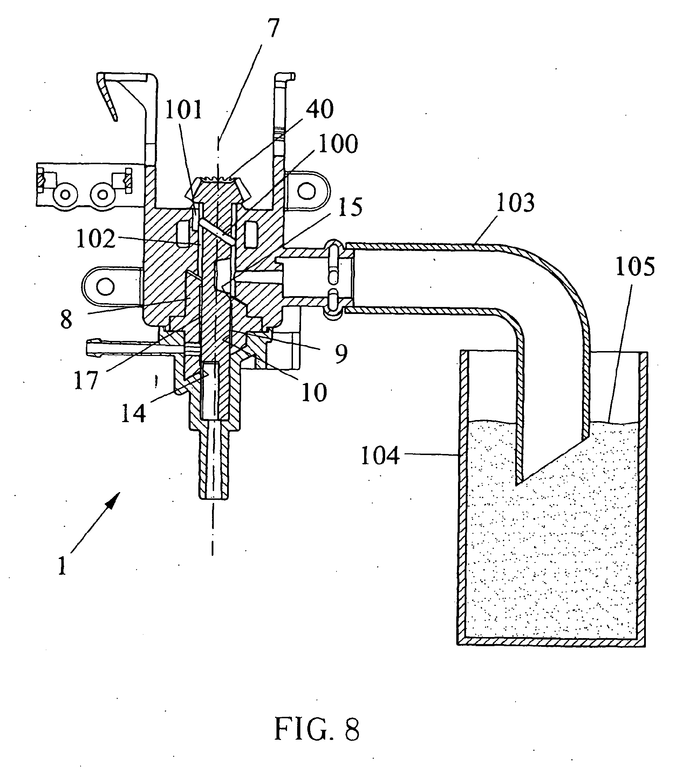

According to an important aspect of the invention shown in Figures 7 and 8, the device 1 preferably also comprises a second connection passage of the first outlet 4 with atmospheric pressure.

The stem 6 also has a second element 100 movable as a result of rotation of this stem 6 between an open position of the second connection passage taken when the first element is in the closed position of the first connection passage and a closed position of the second connection passage taken when the first element is in the open position of the first connection passage.

The second element 100 is placed in an interstice 102 provided between the internal lateral surface of the stator 2 and the external lateral surface of the stem 6.

The second element 100 is fitted in particular around the stem 6 and, as a result of rotation of the stem 6 overlaps a channel 101 provided in the internal lateral surface of the stator 2 which surrounds the stem 6 to open the second connection passage, or is staggered with regard to the channel 101 of the stator 2 to close the second connection passage.

The second element 100 is preferably a gasket, in particular toroidal in shape, suitable to make a seal between the stem 6 and the stator 2 and lying in a plane inclined with respect to the axis 7 of the stem 6.

The channel 101 extends rectilinearly parallel to the axis 7 of the stem 6 until it exits on the top surface of the stator 2 from which the head of the stem 6 emerges.

The first connection passage instead comprises an interstitial chamber 17 between the stem 6 and the sealing element 8 to which at least one preferably radial through hole 16 of the sealing element has access.

The interstitial chamber 17 has a variable length in the direction of the axis 7 of the stem 6.

The interstitial chamber 17 is preferably defined between an indented lateral surface 9 of the sealing element 8 and the external lateral surface 10 of the stem 6 which in turn slides on at least a first and respectively a second perimeter contact area 15 and respectively 14 of the sealing element 8.

The first element can be positioned as a result of rotation of the stem 6 between a position over the interstitial chamber 17 to open the first connection passage and a position staggered with respect to the interstitial chamber 17 to close the first connection passage.

The first element comprises in particular a first surface groove 13 of the stem 6, extending rectilinearly and parallel to the axis 7 of the stem 6.

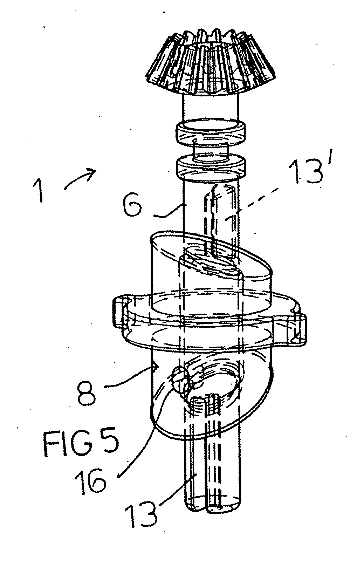

We shall now refer to the embodiments shown in Figures 5 to 9.

The device 1 in this case also has a second outlet 4' and a third connection passage between the first inlet 3 and the second outlet 4'. The stem 6 has a third element movable as a result of rotation of this stem 6 between an open position and a closed position of the third connection passage. The interstitial chamber 17 is common to the first and to the third connection passage. The third element can be positioned as a result of rotation of the stem 6 between a position over the interstitial chamber 17 to open the third connection passage and a position staggered with respect to the interstitial chamber 17 to close the third connection passage. The third element is in a position angularly staggered with respect to the first element. The second element comprises a second surface groove 13' of the stem 6, extending rectilinearly and parallel to the axis 7 of the stem 6. When the first groove 13 is over the interstitial chamber 17, the second groove 13' is staggered with respect to the interstitial chamber 17, and vice versa, when the first groove 13 is staggered with respect to the interstitial chamber 17, the second groove 13' is over the interstitial chamber 17. Moreover, the stem 6 has an intermediate angular position in which the first groove 13 and the second groove 13' are simultaneously staggered with respect to the interstitial chamber 17. Purely by way of example, the first and the second groove 13 and 13' can be staggered by an angle of 180° while the intermediate angular position in which the first groove 13 and the second groove 13' are both staggered with respect to the interstitial chamber 17 can be angularly equidistant at 90° from the first groove 13 and at 90° from the second groove 13'. We shall now refer more generally to all the embodiments of the invention.

The sealing element 8 is in particular a shaped annular gasket.

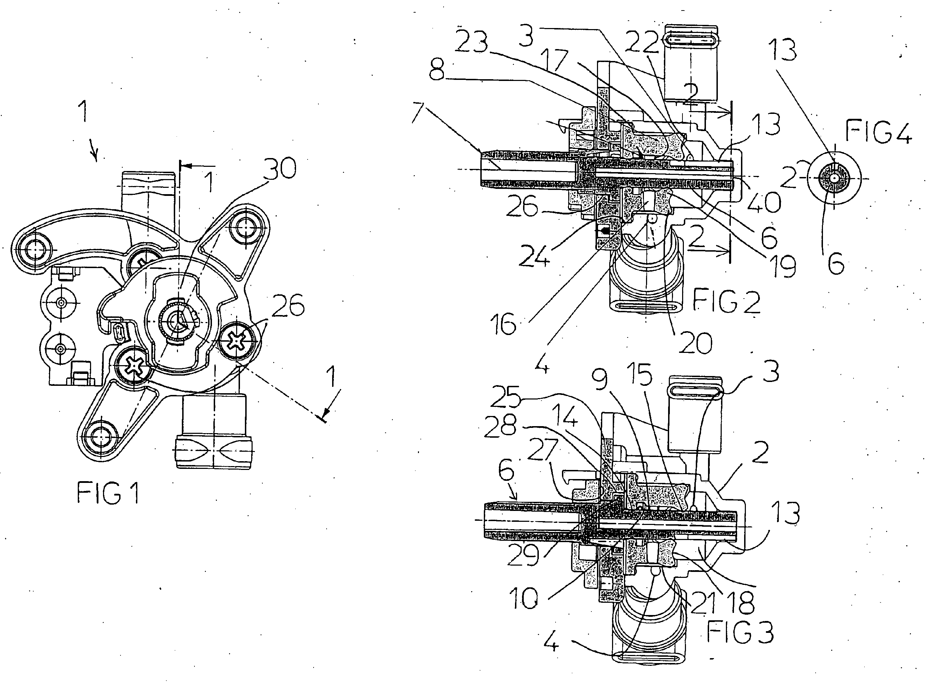

The section of the sealing element 8, in the plane comprising the axis 7, is preferably trapezoidal in shape. In the embodiment in Figures 1-4 the section of the sealing element 8 is substantially in the shape of a rectangular trapezoid, whereas in the embodiments of Figures 5-9 the section is in the shape of an isosceles trapezoid. However, in both cases it is possible for the section to be in the shape of a scalene trapezoid.

We shall now refer for convenience to the embodiment of Figures 1-4, although the concept described below can also refer to different embodiments of the present invention in which the stator 2 has more than one outlet.

According to a particularly advantageous aspect of the present invention, the sealing element 8 has means to automatically regulate the seal when the pressure of the fluid increases.

The automatic regulating means comprise at one end of the sealing element 8 at least a first lip 19 thereof in contact with the external lateral surface 10 of the stem 6. The first lip 19 of the sealing element 8 has a surface exposed to the pressure of the fluid occupying the internal free volume of the stator 2 but external to the interstitial chamber 17, so that the direction of the force of pressure resulting thereon is directed against the stem 6.

The automatic regulating means also comprise, at the same end of the sealing element 8, a second lip 20 thereof, in contact with the internal lateral surface 21 of the stator. The second lip 20 of the sealing element 8 has a surface exposed to the pressure of the fluid occupying the internal free volume of the stator 2 but external to the interstitial chamber 17, so that the direction of the force of pressure resulting thereon is directed against the stator 2.

These surfaces of the first lip 19 and of the second lip 20 exposed to the pressure are in particular mutually convergent so as to define a concave end surface for the sealing element 8.

The stator 2 provided internally with means for axial positioning of the sealing element 8, comprising in particular a first shoulder 22 of the internal wall of the stator 2, forming a limit stop for the lip 20, and a second shoulder 23, forming a limit stop for a projection 24 of the end of the sealing element 8 opposite the end on which the first and the second lip 19 and 20 are provided.

A cover 25 is fixed, for example by means of screws 26, to the stator 2.

The cover 25 is provided with a central opening 26 for passage of the stem 6, with first means for locking the axial position of the sealing element 8, and with second means for locking the axial position of the stem 6.

The first locking means comprise an internal surface 27 of the cover 25 which acts as a restraint, while the second locking means comprise a radial indent 28 of the opening 26 in which a radial projection 29 of the stem 6 couples.

Finally, the stem has a knob 30 for operation thereof, placed adjacent to the external side of the cover 25. Alternatively to the knob 30, the stem 6 can be motorized (for example in the embodiments of Figures 5-9 the stem 6 has a toothed wheel 40 at the top, intended to receive movement from a gear motor).

The stem 6 and the stator 2 can advantageously be made of moulded plastic so as to greatly simplify the production process and consequently reduce production costs.

The angle of rotation of the stem 6 to obtain any operating position can be set as required.

It can be provided in general that the device 1 operates as a valve for opening and closing an outlet, as a flow diverter to switch discharge of the fluid from the first to the second outlet, or vice versa, or as a flow regulator with regulation of the "all or nothing" or continuous type.

A particularly advantageous aspect of the present invention consists in the fact that friction between the movable part and the fixed part during rotation of the stem 6 does not take place on the external lateral surface but on the internal lateral surface of the sealing element 8, i.e. in a point radially close to the rotation axis which thus allows the rolling friction force, which occurs when the device 1 is operated, to be greatly limited.

A further particularly advantageous aspect of the present invention is that the sealing element 8 can be made to be made self-adapting, as the seal thereof increases when the pressure of the fluid increases.

The device of the present invention is designed to be fitted to a coffee machine, where a controlled jet of steam and/or water is required.

Operation of the device is extremely simple.

With reference to the embodiment of Figures 1-4 to open the first connection passage the stem 6 is rotated through 180°, taking the groove 13 from the staggered position outside the sealing element 8 to the position over the sealing element 8 to produce a by-pass from the internal free volume of the stator 2 to the interstitial chamber 17 from where, through the hole 16 of the sealing element 8, the fluid reaches the first outlet 4.

With reference to the embodiments of Figures 5-9 for selective opening of the first connection passage, starting from the intermediate angular position of the stem 6 in which both the first and the third connection passage are closed, the stem 6 is rotated through 90° in one direction to take the first groove 13 over the sealing element 8 to produce a by-pass from the interstitial chamber 17 to the region of the interstice 102 delimited between the sealing element 8 and the second element 100 from where the fluid reaches the first outlet 4. Instead, for selective opening of the third connection passage, again starting from the intermediate angular position of the stem 6, the stem 6 is rotated through 90° in the opposite direction to take the second groove 13' over the sealing element 8 to produce a by-pass from the interstitial chamber 17 to second outlet 4'.

Naturally in possible variants of the present invention the angles of rotation for switching the device from one to the other of its operating positions can differ from those indicated above.

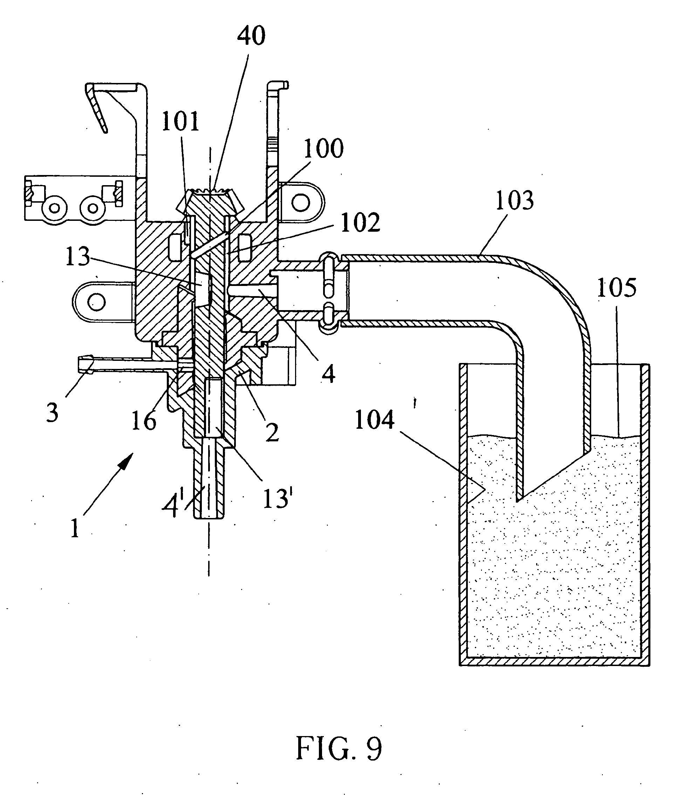

We shall now refer in particular to operation of the device 1 of the embodiment shown in Figures 8 and 9, which show a dispenser 103 fitted to the first outlet 4 and inserted under the level 105 of the milk in a container 104 for milk to be heated.

As described above, when the first connection passage is open to dispense steam into the container 104, the second connection passage is closed but opens automatically when the stem 6 is rotated to close the first connection passage.

It must be noted that after dispensing, if the second communication passage were not opened, the steam which condenses inside the dispenser 3 would create a vacuum pressure which would tend to cause the milk to travel towards the inside of the dispenser 193 and from there towards the internal parts of the device 1, where it would subsequently solidify and form deposits that are difficult to remove.

Instead, in an extremely advantageous manner, automatic opening of the second connection passage when the first connection passage closes causes air to be sucked in from the outside environment which compensates the vacuum created inside the dispenser 103 thus preventing the milk from travelling upward.

The dispenser 103 and the internal parts of the device 1 therefore remain in optimal conditions of hygiene, not only due to the fact that they are not contaminated by milk residues, but also due to the fact that they are washed by a light flow of air which is then discharged into the container 104.

## Claims

1. A shut-off and regulating device (1) for the outflow of a fluid, in particular steam and/or hot water, comprising a stator (2) having an inlet (3) and at least a first outlet (4) for said fluid, a stem (6) rotating about its axis (7), housed in said stator (2), about which a sealing element (8) extends, supported fixed by said stator (2) and interposed between said inlet (3) and said at least a first outlet (4), and a first connection passage between said inlet (3) and said at least a first outlet (4), said stem (6) in turn having at least a first element (13) movable as a result of rotation of said stem (6) between an open position and a closed position of said first connection passage,
**characterized in that** it comprises a second connection passage of said at least one first outlet (4) with atmospheric pressure, said stem (6) having a second element (100) movable as a result of rotation of said stem (6) between an open position of said second connection passage, taken when said first element (13) is in said closed position of said first connection passage, and a closed position of said second connection passage, taken when said first element (13) is in said open position of said first connection passage.

2. A shut-off and regulating device (1) for the outflow of a fluid, in particular steam and/or hot water, according to the preceding claim, **characterized in that** said second element (100) is fitted around said stem (6) and as a result of rotation of said stem (6) is positioned over a channel (101) of the internal lateral surface of said stator (2) in said open position of said second connection passage and is positioned staggered with respect to said channel (101) in said closed position of said second connection passage.

3. A shut-off and regulating device (1) for the outflow of a fluid, in particular steam and/or hot water, according to the preceding claim, **characterized in that** said second element (101) is a sealing gasket provided in an interstice (102) between said stem (6) and said stator (2) and lying in a plane inclined with respect to the axis (7) of said stem (6).

4. A shut-off and regulating device (1) for the outflow of a fluid, in particular steam and/or hot water, according to the preceding claim, **characterized in that** said sealing gasket is toroidal.

5. A shut-off and regulating device (1) for the outflow of a fluid, in particular steam and/or hot water, according to one or more of the preceding claims, **characterized in that** said first connection passage comprises an interstitial chamber (17) between said stem (6) and said sealing element (8) to which at least one through hole (16) of said sealing element (8) has access, said interstitial chamber (17) having a variable length in the direction of said axis (7) of said stem (6), said first element (13) being positioned over said interstitial chamber (17) in said open position of said first communication passage and being disposed staggered with respect to said interstitial chamber (17) in said closed position of said first communication passage.

6. A shut-off and regulating device (1) for the outflow of a fluid according to the preceding claim, **characterized in that** it comprises at least a second outlet (4') for said fluid, and **in that** said stem (6) comprises, in an angularly staggered position with respect to said first element (13), at least a third element (13') to open a third connection passage between said inlet (3) and said second outlet (4'), said third element (13') being positioned over said interstitial chamber (17) in said open position of said third communication passage and being positioned staggered with respect to said interstitial chamber (17) in said closed position of said third communication passage.

7. A shut-off and regulating device (1) according to the preceding claim, **characterized in that** said first element (13) and respectively said third element (13') comprise a first groove and respectively a second groove angularly staggered with respect to said first groove.

8. A shut-off and regulating device (1) according to the preceding claim, **characterized in that** when said first groove is over said interstitial chamber (17) said second groove is staggered with respect to said interstitial chamber (17) and vice versa.

9. A shut-off and regulating device (1) according to claim 7 or 8 **characterized in that** said stem (6) has an angular intermediate position in which said first groove and said second groove are simultaneously staggered with respect to said interstitial chamber (17).

10. A shut-off and regulating device (1) according to one or more of the preceding claims, **characterized in that** said sealing element (8) is an annular gasket having a trapezoidal axial section.

11. A shut-off and regulating device (1) according to one or more of the preceding claims, **characterized in that** said sealing element (8) has means to automatically regulate the seal when the pressure of said fluid increases.

12. A shut-off and regulating device (1) according to the preceding claim, **characterized in that** said automatic regulation means comprise at least a first lip (19) of said sealing element (8) in contact with the external lateral surface of said stem (6), said first lip (19) having a surface exposed to said pressure so that the direction of the force of pressure resulting thereon is directed against said stem (6).

13. A shut-off and regulating device (1) according to claim 12 **characterized in that** said automatic regulation means comprise a second lip (20) of said sealing element (8) in contact with the internal lateral surface of said stator (2) said second lip (20) having a surface exposed to said pressure so that the direction of the force of pressure resulting thereon is directed against the stator (2).

14. A coffee machine **characterized in that** it has a shut-off and regulating device (1) for the outflow of a fluid, in particular steam and/or hot water, according to one or more of the preceding claims.

## Patentansprüche

1. Absperr- und Regeleinrichtung (1) für den Ablauf einer Flüssigkeit, insbesondere Dampf und/oder heißes Wasser, umfassend einen Stator (2), der einen Einlass (3) und mindestens einen ersten Auslass (4) für die Flüssigkeit aufweist, eine Stange (6), die um ihre Achse (7) dreht, die im Stator (2) aufgenommen ist, um die sich ein Dichtungselement (8) erstreckt, das durch den Stator (2) tragend befestigt wird und zwischen dem Einlass (3) und dem mindestens ersten Auslass (4) liegt, sowie einen ersten Verbindungsdurchlauf zwischen dem Einlass (3) und dem mindestens ersten Auslass (4), wobei die Stange (6) wiederum mindestens ein erstes Element (13) aufweist, das als Folge einer Drehung der Stange (6) zwischen einer offenen Position und einer geschlossenen Position des ersten Verbindungsdurchlaufs bewegbar ist, **dadurch gekennzeichnet, dass** sie einen zweiten Verbindungsdurchlauf des mindestens einen ersten Auslasses (4) mit Luftdruck umfasst, wobei die Stange (6) ein zweites Element (100) aufweist, das als Folge einer Drehung der Stange (6) zwischen einer offenen Position des zweiten Verbindungsdurchlaufs, die eingenommen wird, wenn das erste Element (13) in der geschlossenen Position des ersten Verbindungsdurchlaufs ist, und einer geschlossenen Position des zweiten Verbindungsdurchlaufs, die eingenommen wird, wenn das erste Element (13) in der offenen Position des ersten Verbindungsdurchlaufs ist, bewegbar ist.

2. Absperr- und Regeleinrichtung (1) für den Ablauf einer Flüssigkeit, insbesondere Dampf und/oder heißes Wasser, nach dem vorangehenden Anspruch, **dadurch gekennzeichnet, dass** das zweite Element (100) um die Stange (6) herum angelegt und als Folge einer Drehung der Stange (6) über einem Kanal (101) der inneren Seitenfläche des Stators (2) in der offenen Position des zweiten Verbindungsdurchlaufs positioniert ist und gegenüber dem Kanal (101) in der geschlossenen Position des zweiten Verbindungsdurchlaufs versetzt positioniert ist.

3. Absperr- und Regeleinrichtung (1) für den Ablauf einer Flüssigkeit, insbesondere Dampf und/oder heißes Wasser, nach dem vorangehenden Anspruch, **dadurch gekennzeichnet, dass** das zweite Element (101) eine Dichtung ist, die in einem Zwischenraum (102) zwischen der Stange (6) und dem Stator (2) bereitgestellt ist und in einer Ebene liegt, die gegenüber der Achse (7) der Stange (6) geneigt ist.

4. Absperr- und Regeleinrichtung (1) für den Ablauf einer Flüssigkeit, insbesondere Dampf und/oder heißes Wasser, nach dem vorangehenden Anspruch, **dadurch gekennzeichnet, dass** die Dichtung kreisringförmig ist.

5. Absperr- und Regeleinrichtung (1) für den Ablauf einer Flüssigkeit, insbesondere Dampf und/oder warmes Wasser, nach einem oder mehreren der vorangehenden Ansprüche, **dadurch gekennzeichnet, dass** der erste Verbindungsdurchlauf eine Zwischenkammer (17) zwischen der Stange (6) und dem Dichtungselement (8) aufweist, zu der mindestens ein Durchgangsloch (16) des Dichtungselements (8) Zugang hat, wobei die Zwischenkammer (17) eine variable Länge in der Richtung der Achse (7) der Stange (6) aufweist, wobei das erste Element (13) in der ersten Position des ersten Verbindungsdurchlaufs über der Zwischenkammer (17) positioniert ist und wobei es in der geschlossenen Position des ersten Verbindungsdurchlaufs gegenüber der Zwischenkammer (17) versetzt angeordnet ist.

6. Absperr- und Regeleinrichtung (1) für den Ablauf einer Flüssigkeit nach dem vorangehenden Anspruch, **dadurch gekennzeichnet, dass** sie mindestens einen zweiten Auslass (4') für die Flüssigkeit umfasst, und dass die Stange (6) in einer winklig versetzten Position gegenüber dem ersten Element (13) mindestens ein drittes Element (13') umfasst, um einen dritten Verbindungsdurchlauf zwischen dem Einlass (3) und dem zweiten Auslass (4') zu öffnen, wobei das dritte Element (13') in der offenen Position des dritten Verbindungsdurchlaufes über der Zwischenkammer (17) positioniert ist und wobei es in der geschlossenen Position des dritten Verbindungsdurchlaufes gegenüber der Zwischenkammer (17) versetzt positioniert ist.

7. Absperr- und Regeleinrichtung (1) nach dem vorangehenden Anspruch, **dadurch gekennzeichnet, dass** das erste Element (13) beziehungsweise dritte Element (13') eine erste Rille beziehungsweise eine zweite Rille umfasst, die gegenüber der ersten Rille winklig versetzt ist.

8. Absperr- und Regeleinrichtung (1) nach dem vorangehenden Anspruch, **dadurch gekennzeichnet, dass** die zweite Rille, wenn die erste Rille über der Zwischenkammer (17) liegt, gegenüber der Zwischenkammer (17) versetzt ist und umgekehrt.

9. Absperr- und Regeleinrichtung (1) nach Anspruch 7 oder 8, **dadurch gekennzeichnet, dass** die Stange (6) eine winklige Zwischenposition aufweist, in der die erste Rille und die zweite Rille gleichzeitig gegenüber der Zwischenkammer (17) versetzt sind.

10. Absperr- und Regeleinrichtung (1) nach einem oder mehreren der vorangehenden Ansprüche, **dadurch gekennzeichnet, dass** das Dichtungselement (8) eine ringförmige Dichtung ist, die einen trapezförmigen Axialschnitt aufweist.

11. Absperr- und Regeleinrichtung (1) nach einem oder mehreren der vorangehenden Ansprüche, **dadurch gekennzeichnet, dass** das Dichtungselement (8) Mittel zur automatischen Regelung der Dichtung bei Anstieg des Drucks der Flüssigkeit aufweist.

12. Absperr- und Regeleinrichtung (1) nach dem vorangehenden Anspruch, **dadurch gekennzeichnet, dass** die automatischen Regelungsmittel mindestens eine erste Lippe (19) des Dichtungselements (8) im Kontakt mit der äußeren Seitenfläche der Stange (6) umfassen, wobei die erste Lippe (19) eine Oberfläche aufweist, die dem Druck so ausgesetzt ist, dass die Richtung der darauf erfolgenden Druckkraft gegen die Stange (6) gerichtet wird.

13. Absperr- und Regeleinrichtung (1) nach Anspruch 12, **dadurch gekennzeichnet, dass** die automatischen Regelungsmittel eine zweite Lippe (20) des Dichtungselements (8) in Kontakt mit der inneren Seitenfläche des Stators (2) umfassen, wobei die zweite Lippe (20) eine Oberfläche aufweist, die dem Druck so ausgesetzt ist, dass die Richtung der darauf erfolgenden Druckkraft gegen den Stator (2) gerichtet wird.

14. Kaffeemaschine, **dadurch gekennzeichnet, dass** sie eine Absperr- und Regeleinrichtung (1) für den Ablauf einer Flüssigkeit, insbesondere Dampf oder heißes Wasser, nach einem oder mehreren der vorangehenden Ansprüche aufweist.

## Revendications

1. Dispositif d'arrêt et de réglage (1) du débit d'un fluide, en particulier vapeur et/ou eau chaude, comprenant un stator (2) ayant une entrée (3) et au moins une première sortie (4) pour ledit fluide, une tige (6) pivotant autour de son axe (7), logée dans ledit stator (2), autour duquel se développe un élément d'étanchéité (8), soutenu fixement par ledit stator (2) et interposé entre ladite entrée (3) et ladite au moins première sortie (4), et un premier passage de connexion entre ladite entrée (3) et ladite au moins première sortie (4), ladite tige (6), à son tour, ayant au moins un premier élément (13) pouvant se déplacer suite à la rotation de ladite tige (6) entre une position ouverte et une position fermée dudit premier passage de connexion, **caractérisé en ce qu'**il comprend un deuxième passage de connexion de ladite au moins première sortie (4) sous pression atmosphérique, ladite tige (6) ayant un deuxième élément (100) pouvant se déplacer suite à la rotation de ladite tige (6) entre une position ouverte dudit deuxième passage de connexion, adoptée quand ledit premier élément (13) est dans ladite position fermée dudit premier passage de connexion, et une position fermée dudit deuxième passage de connexion, adoptée quand ledit premier élément (13) est dans ladite position ouverte dudit premier passage de connexion.

2. Dispositif d'arrêt et de réglage (1) du débit d'un fluide, en particulier vapeur et/ou eau chaude, selon la revendication précédente, **caractérisé en ce que** ledit deuxième élément (100) est monté autour de ladite tige (6) et, suite à la rotation de ladite tige (6), se place au-dessus d'un canal (101) de la surface latérale interne dudit stator (2) dans ladite position ouverte dudit deuxième passage de connexion, et se met en décalé par rapport audit canal (101) dans ladite position fermée dudit deuxième passage de connexion.

3. Dispositif d'arrêt et de réglage (1) du débit d'un fluide, en particulier vapeur et/ou eau chaude, selon la revendication précédente, **caractérisé en ce que** ledit deuxième élément (101) est un joint d'étanchéité placé dans un interstice (102) entre ladite tige (6) et ledit stator (2) et se trouvant sur un plan incliné par rapport à l'axe (7) de ladite tige (6).

4. Dispositif d'arrêt et de réglage (1) du débit d'un fluide, en particulier vapeur et/ou eau chaude, selon la revendication précédente, **caractérisé en ce que** ledit joint d'étanchéité est torique.

5. Dispositif d'arrêt et de réglage (1) du débit d'un fluide, en particulier vapeur et/ou eau chaude, selon une ou plusieurs des revendications précédentes, **caractérisé en ce que** ledit premier passage de connexion comprend une cellule interstitielle (17) entre ladite tige (6) et ledit élément d'étanchéité (8), à laquelle a accès au moins un trou de passage (16) dudit élément d'étanchéité (8), ladite cellule interstitielle (17) ayant une longueur variable dans la direction dudit axe (7) de ladite tige (6), ledit premier élément (13) étant positionné au-dessus de ladite cellule interstitielle (17) dans ladite position ouverte dudit premier passage de communication et étant placé en décalé par rapport à ladite cellule interstitielle (17) dans ladite position fermée dudit premier passage de communication.

6. Dispositif d'arrêt et de réglage (1) du débit d'un fluide selon la revendication précédente, **caractérisé en ce qu'**il comprend au moins une deuxième sortie (4') pour ledit fluide, et **en ce que** ladite tige (6) comprend, dans une position angulairement décalée par rapport audit premier élément (13), au moins un troisième élément (13') pour ouvrir un troisième passage de connexion entre ladite entrée (3) et ladite deuxième sortie (4'), ledit troisième élément (13') étant positionné au-dessus de ladite cellule interstitielle (17) dans ladite position ouverte dudit troisième passage de communication et étant positionné en décalé par rapport à ladite cellule interstitielle (17) dans ladite position fermée dudit troisième passage de communication.

7. Dispositif d'arrêt et de réglage (1) selon la revendication précédente, **caractérisé en ce que** ledit premier élément (13) et, respectivement, ledit troisième élément (13') comprennent une première rainure et, respectivement, une deuxième rainure angulairement décalée par rapport à ladite première rainure.

8. Dispositif d'arrêt et de réglage (1) selon la revendication précédente, **caractérisé en ce que**, quand ladite première rainure se trouve au-dessus de ladite cellule interstitielle (17), ladite deuxième rainure est en décalé par rapport à ladite cellule interstitielle (17) et vice versa.

9. Dispositif d'arrêt et de réglage (1) selon les revendications 7 ou 8, **caractérisé en ce que** ladite tige (6) a une position intermédiaire angulaire, dans laquelle ladite première rainure et ladite deuxième rainure sont simultanément en décalé par rapport à ladite cellule interstitielle (17).

10. Dispositif d'arrêt et de réglage (1) selon une ou plusieurs des revendications précédentes, **caractérisé en ce que** ledit élément d'étanchéité (8) est un joint annulaire ayant une section axiale trapézoïdale.

11. Dispositif d'arrêt et de réglage (1) selon une ou plusieurs des revendications précédentes, **caractérisé en ce que** ledit élément d'étanchéité (8) comporte des moyens pour régler automatiquement l'étanchéité, quand la pression dudit fluide augmente.

12. Dispositif d'arrêt et de réglage (1) selon la revendication précédente, **caractérisé en ce que** lesdits moyens de réglage automatique comprennent au moins une première lèvre (19) dudit élément d'étanchéité (8) en contact avec la surface latérale externe de ladite tige (6), ladite première lèvre (19) ayant une surface exposée à ladite pression de sorte que la force de pression exercée se dirige contre ladite tige (6).

13. Dispositif d'arrêt et de réglage (1) selon la revendication 12, **caractérisé en ce que** lesdits moyens de réglage automatique comprennent une deuxième lèvre (20) dudit élément d'étanchéité (8) en contact avec la surface latérale interne dudit stator (2), ladite deuxième lèvre (20) ayant une surface exposée à ladite pression de sorte que la force de pression exercée se dirige contre le stator (2).

14. Machine à café **caractérisée en ce qu'**elle comporte un dispositif d'arrêt et de réglage (1) du débit d'un fluide, en particulier vapeur et/ou eau chaude, selon une ou plusieurs des revendications précédentes.
